# EUROPÄISCHE PATENTSCHRIFT

(11) **EP 0 400 508 B1**
(45) Veröffentlichungstag und Bekanntmachung des Hinweises auf die Patenterteilung: **28.09.1994**
(21) Anmeldenummer: 90110005.7
(22) Anmeldetag: 26.05.1990
(51) Int. Cl.: F16F 15/16, F16F 9/10

(54) **Vorrichtung zur Änderung der zeitlichen Durchflussmenge bei einem Drehschwingungsdämpfer**
Device for changing the flow-rate in a trosional vibration damper
Dispositif pour le changement de débit en fonction du temps dans un amortisseur de vibrations tortionnelles

(30) Priorität: 02.06.1989 DE 3918063
(43) Veröffentlichungstag der Anmeldung: 05.12.1990
(73) Patentinhaber: Rohs, Ulrich, Dr.-Ing., D-52351 Düren (DE)
(72) Erfinder: Rohs, Ulrich, Dr.-Ing., D-5160 Düren (DE); Rohs, Hans, Prof. Dr.-Ing., D-7324 Rechberghausen (DE); Heidingsfeld, Dietmar, Dipl.-Ing., D-5100 Aachen (DE); Petri, Hans Ing., D-5203 Much (DE)
(74) Vertreter: Rauh, Wolfgang Kurt

(56) Entgegenhaltungen:
- DE-C-37 269 26
- GB-A- 0 294 015
- US-A- 2 699 122

## Beschreibung

Die Erfindung betrifft eine Vorrichtung zur Änderung der zeitlichen Durchflußmenge eines flüssigen Dämpfungsmittels bei einem Drehschwingungsdämpfer, insbesondere für Kolbenmotoren, in dessen mit der An- bzw. Abtriebswelle verbundenem, umlaufenden zylindrischen Dämpfergehäuse Stirnzahnräder planetenartig gelagert sind und mit einem auf der Ab- bzw. Antriebswelle sitzenden, zentralen Zahnrad in Eingriff stehend eine Zahnradpumpe für einen geschlossenen Kreislauf des Dämpfungsmittels bilden, wobei in der Förderleitung für das Dämpfungsmittel auf der jeweiligen Druckseite eine Speicherkammer mit elastisch veränderbarem Volumen z.B. ein Membranspeicher oder dgl. und/oder ein drehzahlabhängig gesteuertes Kolbenventil vorgesehen ist, dessen Kolben geeignet ist, als Drosselstellglied durch seine Axialbeweguhg den Querschnitt der Förderleitung zu verändern.

Eine Vorrichtung dieser Art ist durch die DE-C-37 26 926 bekannt.Auch bei dieser, gegenüber dem früheren Stand der Technik verbesserten Vorrichtung können noch Schwierigkeiten mit der inneren Dichtigkeit, insbesondere der Zahnradpumpe, auftreten, da es infolge innerer Leckagen möglich ist, daß sich unerwünschte Relativverdrehungen ergeben. Um dies zu vermeiden, müssen auch hier, wie bei allen anderen bekannten Drehschwingungsdämpfern relativ hochviskose Öle als Dämpfungsmittel verwendet werden. Nun haben zähe Öle relativ schlechte Schmiereigenschaften und sind daher an sich wenig erwünscht.

Der vorliegenden Erfindung liegt daher die Aufgabe zugrunde, ausgehend von der eingangs genannten Vorrichtung eine solche zu schaffen, die durch eine geeignete Druckentlastung an den Zahnrädern eine bessere Abdichtung ermöglicht und darüber hinaus einfacher und billiger herstellbar ist.

Die Lösung der Aufgabe besteht gemäß der Erfindung in den kennzeichnenden Merkmalen der Ansprüche 1 und 2.

Aus der US-A-2 699 122 ist zwar eine Zahnradpumpe bekannt, bei der die planetenartig angeordneten Zahnräder, die mit einem Sonnenrad in Eingriff stehen, in entsprechenden Ausnehmungen des Gehäuses zapfenlos gehalten sind, doch entspricht diese bekannte Zahnradpumpe nicht dem Oberbegriff der vorliegenden Ansprüche 1 und 2.

Durch die zusätzliche erfindungsgemäße Druckentlastung ist auch eine sinnvolle Verwendung von zapfenlos geführten Zahnrädern erst möglich, insbesondere bei den hohen Drücken in einem Drehschwingungsdämpfer, da andernfalls ein zu starker Abrieb auftreten würde.

Durch den Wegfall der Zahnradwellen und ihrer Lager ergeben sich nicht nur Bau- und Montagevorteile, sondern auch eine bessere Abdichtung der Zahnradpumpe. Es sind darüber hinaus weniger eng tolerierte Fertigungsmaße möglich.

Weitere vorteilhafte Weiterbildungen der erfindungsgemäßen Vorrichtung ergeben sich aus den Ansprüchen 3-10.

Besonders vorteilhaft ist die Ausbildung des zentralen Zahnrades als innenverzahntes Hohlrad. Bei gleichem Fördervolumen der Zahnradpumpe baut eine Zahnradpumpe mit einem Hohlrad kleiner. Es ist somit möglich, auch bei relativ kleinem gegebenen Bauraum eine zuverlässige starke Vorrichtung unterzubringen.

Da der Dämpfungsmitteleinlaß außen liegt, ergibt sich stets eine gute blasenfreie Zuführung des Dämpfungsmittels zur Saugseite durch Einwirkung der Fliehkraft. Dabei sammelt sich die Luft innen. Die Hohlradausführung bietet infolge der relativ großen radialen Fläche und Hebellängen des Pumpeninnern eine gute Möglichkeit zur Aufnahme von Axial- und Kippkräften sowie große Räume zur Aufnahme von Dämpfungsmittel. Das größere spezifische Fördervolumen der Zahnradpumpe mit Hohlrad führt auch zu niedrigeren Betriebsdrücken und trägt hierdurch ebenfalls dazu bei, etwaige Leckagen zu vermeiden. Dabei ist es besonders günstig, daß der relativ große Innenraum zur Unterbringung von mehr als zwei planetenartig angeordneten Stirnzahnrädern ausgenutzt werden kann.

Weitere vorteilhafte Ausgestaltungen ergeben sich aus den weiteren Unteransprüchen.

Nachstehend ist die Erfindung anhand der Zeichnung näher erläutert. Es zeigen:
- Fig.1: einen Querschnitt durch eine erfindungsgemäße Vorrichtung nach der Linie I-I in Fig.2.
- Fig.2: einen Schnitt nach der Linie II-II in Fig.1
- Fig.3: eine Ansicht einer Druckentlastung,
- Fig.4: eine Ansicht einer anderen Druckentlastung,
- Fig.5: einen axialen Schnitt durch ein Planetenrad der Fig.4
- Fig.6: eine Draufsicht auf eine Zahnradpumpe mit Sonderverzahnung,
- Fig.7: eine Draufsicht auf eine Zahnradpumpe mit Sonderlagerung
- Fig.8: eine Draufsicht auf eine Einrichtung zur Vordämpfung,
- Fig.9: einen Schnitt nach der Linie IX-IX in Fig.8

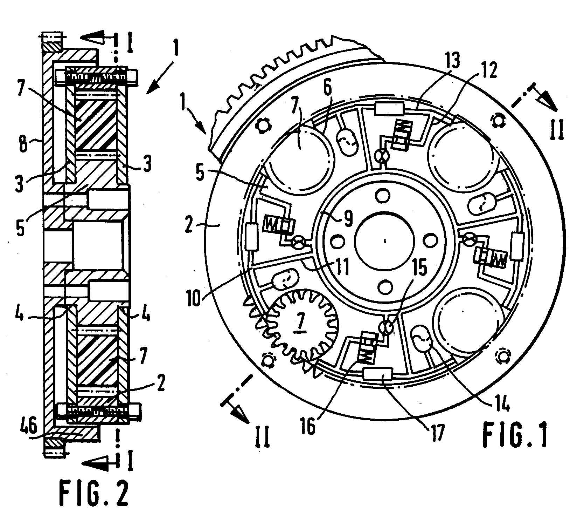

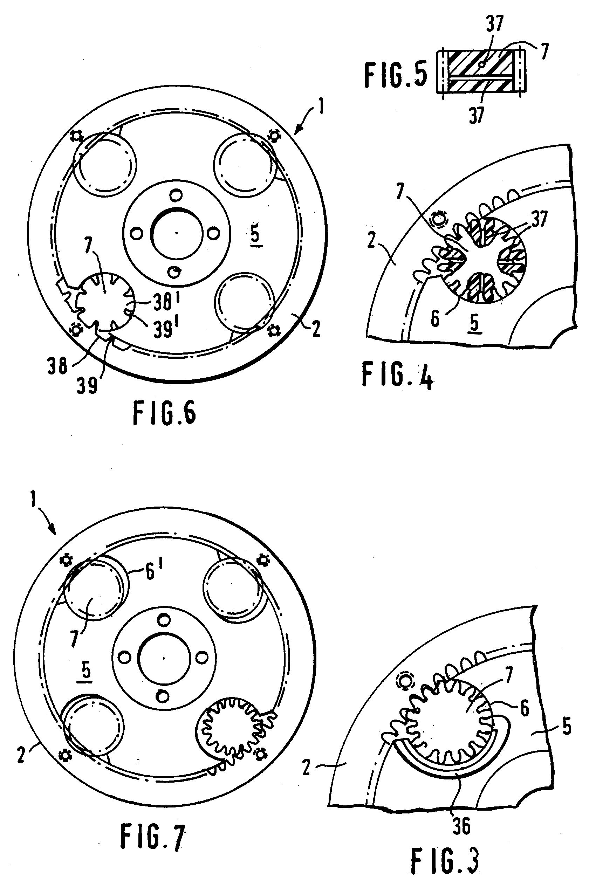

Die Fig.1 und 2 zeigen eine erfindungsgemäße Vorrichtung mit einem als innenverzahntes Hohlrad 2 ausgebildeten zentralen Zahnrad einer Zahnradpumpe 1, an dem ringförmige Stirnplatten 3 befestigt sind, die auf Schultern 4 eines Pumpeninnenteiles 5 drehbar gehalten sind. Das Pumpeninnenteil 5 weist an seinem Rand vier etwa kreisförmige, offene Ausnehmungen 6 zur Aufnahme von planetenartig angeordneten Stirnzahnrädern 7 auf und ist mittels nicht dargestellter Schrauben mit dem Schwungrad des Anlasserzahnrades 8 verbunden, das das Hohlrad 2 mit einem Rand 46 mit radialem Abstand topfartig übergreift.

Die Stirnzahnräder 7 sind ohne weitere Zapfen oder dgl. in den Ausnehmungen 6 gelagert und stehen mit dem Hohlrad 2 in Eingriffsverbindung.

Wie Fig.1 zeigt, sind die planetenartig angeordneten Stirnzahnräder 7 durch eine geschlossene Förderleitung 10 verbunden, die ihrerseits aus einer Innenringleitung 9, hiermit verbundenen Zu- und Ablaufleitungen 11,12 und einer diese überbrückenden Steuerleitung 13 besteht.

An die Zulaufleitung 11 ist eine Speicherkammer 14 mit elastisch veränderbarem Volumen, z.B. ein Blasen- oder Membranspeicher angeschlossen, der bei Druckanstieg zeitweilig einen Teil des Dämpfungsmittels aus der Zulaufleitung 11 aufnimmt und nach Ablauf der Druckspitze wieder abgibt. Die Speicherkammer wirkt ähnlich einem Windkessel und im Dämpfungssystem wie eine die Schwingungsamplituden verringernde Feder.

Von der Innenringleitung 9 führt die Ablaufleitung 12 über eine Drossel 15 durch ein drehzahlabhängig steuerbares Kolbenventil 16, das mit einem radial angeordneten, federnd abgestützten und eine Einschnürung aufweisenden Kolben versehen ist, der sich bei auftretenden Fliehkräften nach außen bewegt und die Ablaufleitung 12 teilweise oder ganz verschließt.

Der hinter dem Kolbenventil 16 liegende Teil der Ablaufleitung 12 ist mit dem zwischen der Drossel 15 und der Speicherkammer 14 befindlichen Teil der Zulaufleitung 11 durch eine Steuerleitung 13 überbrückt, die durch ein Steuerventil 17 geht.

Ein besonders sicherer, verschleißarmer Lauf der zapfenfrei, flächig gelagerten, planetenartig angeordneten Stirnzahnräder 7 in den Ausnehmungen 6 des Pumpeninnenteiles 5 kann durch einen Druckausgleich erzielt werden.

Fig.4 zeigt eine Möglichkeit eines solchen Druckausgleiches in der Form einer von der Ansaugseite der Pumpenkammer führenden, zur Ausnehmung 6 konzentrischen Ringnut 36, die diametral zur Ansaugstelle in der Ausnehmung 6 (Druckausgleichkanal) mündet.

Fig.5 und 6 zeigen eine andere Ausführungsform. Hierbei weist jedes Stirnzahnrad 7 diametrale, zueinander axial versetzte Durchgangsbohrungen 37 auf.

Es ist zweckmäßig, zwischen den Stirnzahnrädern 7 und dem Hohlrad 2 eine Sonderverzahnung vorzusehen, bei der das eine Zahnrad Zähne einer Normalverzahnung und Zahnlücken aufweist, die breiter sind als bei einer Normalverzahnung und bei dem das andere Zahnrad in umgekehrter Weise ausgebildet ist. Beispielsweise ist eine solche Sonderverzahnung wie in Fig.7 so ausgebildet, daß das Hohlrad 2 Zahnlücken 38 aufweist, die den Raum zweier benachbarter Zahnlücken einschließlich des dazwischen liegenden Zahnes einer Normalverzahnung einnehmen. Umgekehrt weisen die Stirnzahnräder 7 entsprechend groß ausgebildete Zähne 38' auf, zwischen denen sich Zahnlücken 39' befinden, deren Abmessungen dem Normalprofil entsprechen und mit den Zähnen 39 des Hohlrades 2 korrespondieren. Eine solche Sonderverzahnung hat den Vorteil, daß die Führungsflächen der Stirnzahnräder 7 an der Ausnehmung 6 größer sind als bei Normalverzahnung. Außerdem können größere Kräfte aufgenommen werden. Es können auch andere Größenverhältnisse zwischen Zahn- und Zahnlücke vorgesehen sein.

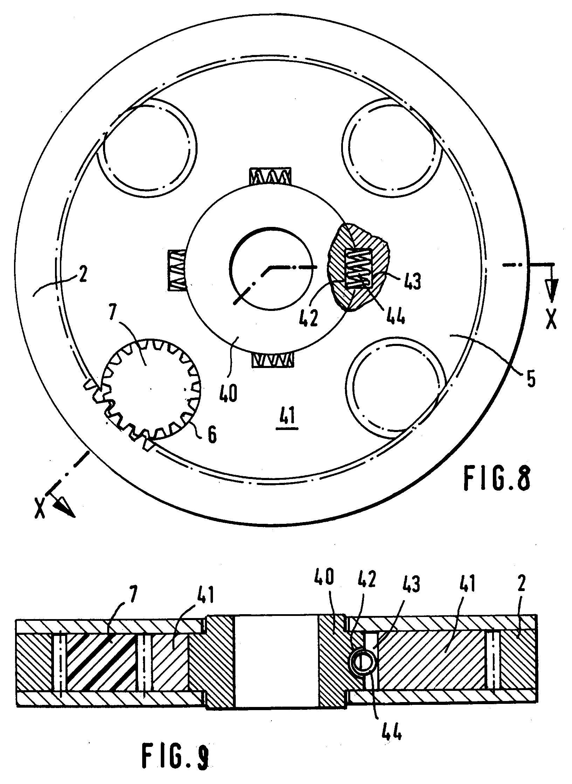

Eine weitere Ausgestaltung der Erfindung zeigt Fig.8. Danach ist es zweckmäßig, die Ausnehmung 6 im Pumpeninnenteil 5 so auszubilden, daß sie dem Stirnzahnrad 7 in Tangentialrichtung ein größeres Spiel gibt, d.h. tangential als Langloch 6' ausgebildet ist. Im Betrieb pendelt sich dann das Stirnzahnrad 7 in seine Betriebsstellung ein und wird erst bei Beaufschlagung mit einem Drehmoment einseitig angelagert und dichtet die Druckseite ab. Im Leerlauf hingegen läßt es ein großes Spiel zu, womit ein "idle rattle" vermieden wird.

Die Relativgeschwindigkeit zwischen dem umlaufenden Pumpengehäuse 2,3 (Hohlrad und Stirnplatten) und dem Pumpeninnenraum 5 ist der für die Dämpfung der Drehschwingungen erforderliche Schlupf. Es gibt Punkte im Kennfeld eines Motors, wo eine mehr oder weniger starke Dämpfung erforderlich ist. Der Schlupf soll daher auf das dem Betriebspunkt zugehörige Maß gesteuert werden, was letztlich eine Steuerung der zeitlichen Durchflußmenge des Dämpfungsmittels gleichkommt.

Bei hohem Schlupf ergibt sich eine Erwärmung des Dämpfungsmittels, die im Extremfall unzulässig hoch sein kann. Für solche Fälle ist es zweckmäßig, wenn die planetenartig angeordneten Stirnzahnräder 7 aus einem Werkstoff bestehen, dessen Wärmedehnung größer ist, als diejenige des Werkstoffes, aus dem das Hohlrad 2 und das Pumpeninnere 5 bestehen. Es ergibt sich dann bei Erreichen einer bestimmten Temperatur, daß die Stirnzahnräder 7 blockieren und kein Schlupf mehr auftritt. Erst wenn der Drehschwingungsdämpfer seine Betriebstemperatur wieder erreicht hat, beginnen dann die Stirnzahnräder 7 wieder zu drehen.

Um eine gute Leerlaufdämpfung zu erzielen, ist eine Vordämpfung vorgesehen. Diese ist in den Fig. 9 und 10 dargestellt. Danach besteht das Pumpeninnenteil 5 aus zwei konzentrisch aufeinander drehbar gelagerten Bauteilen 40,41, die in ihren Lagerflächen radiale Ausnehmungen 42,43 zur formschlüssigen Aufnahme von tangential angeordneten Kupplungsfedern 44 aufweisen. Insbesondere bei Leerlauf oder niedrigem Drehmoment können hierdurch Drehschwingungen abgefangen werden. Sobald ein gewisses Drehmoment übertragen wird, wirkt die Kupplung der Bauteile 40,41 starr.

## Patentansprüche

1. Vorrichtung zur Änderung der zeitlichen Durchflußmenge eines flüssigen Dämpfungsmittels bei einem Drehschwingungsdämpfer, insbesondere für Kolbenmotoren, in dessen mit der An- bzw. Abtriebswelle verbundenem, umlaufenden zylindrischen Dämpfergehäuse Stirnzahnräder planetenartig gelagert sind und mit einem auf der Ab- bzw. Antriebswelle sitzenden, zentrischen Zahnrad in Eingriff stehend, eine Zahnradpumpe für einen geschlossenen Kreislauf des Dämpfungsmittels bilden, wobei in der Förderleitung für das Dämpfungsmittel auf der jeweiligen Druckseite eine Speicherkammer mit elastisch veränderbarem Volumen z.B. ein Membranspeicher oder dgl. und/oder ein drehzahlabhängig gesteuertes Kolbenventil vorgesehen ist, dessen Kolben geeignet ist, als Drosselstellglied durch seine Axialbewegung den Querschnitt der Förderleitung zu verändern,
**dadurch gekennzeichnet,**
daß die planetenartig angeordneten Stirnzahnräder (7) der Zahnradpumpe (1) ohne Achszapfen ausgebildet flächig zwischen den axialen Stirnplatten (3) der Zahnradpumpe (1) in Ausnehmungen (6,6') des Pumpeninneren (5) gelagert sind und
daß das Pumpeninnere (5) einen die Ausnehmung (6,6') für die Stirnzahnräder (7) mit Abstand umgebenden Druckausgleichkanal (36) aufweist, der diametral zur Eingriffsstelle des Zahnradpaares (2,7) in der das Stirnzahnrad (7) aufnehmenden Ausnehmung (6,6') mündet.

2. Vorrichtung zur Änderung der zeitlichen Durchflußmenge eines flüssigen Dämpfungsmittels bei einem Drehschwingungsdämpfer, insbesondere für Kolbenmotoren, in dessen mit der An- bzw. Abtriebswelle verbundenem, umlaufenden zylindrischen Dämpfergehäuse Stirnzahnräder planetenartig gelagert sind und mit einem auf der Ab- bzw. Antriebswelle sitzenden, zentrischen Zahnrad in Eingriff stehend, eine Zahnradpumpe für einen geschlossenen Kreislauf des Dämpfungsmittels bilden, wobei in der Förderleitung für das Dämpfungsmittel auf der jeweiligen Druckseite eine Speicherkammer mit elastisch veränderbarem Volumen, z.B. ein Membranspeicher oder dgl. und/oder ein drehzahlabhängig gesteuertes Kolbenventil vorgesehen ist, dessen Kolben geeignet ist, als Drosselglied durch seine Axialbewegung den Querschnitt der Förderleitung zu verändern,
**dadurch gekennzeichnet,**
daß die planetenartig angeordneten Stirnzahnräder (7) der Zahnradpumpe (1) ohne Achszapfen ausgebildet, flächig zwischen den axialen Stirnplatten (3) der Zahnradpumpe (1) in den Ausnehmungen (6,6') des Pumpeninnern (5) gelagert sind sowie diametrale, axial zueinander versetzte und einander nicht schneidende Druckausgleichbohrungen (37) aufweisen.

3. Vorrichtung nach Anspruch 1 oder 2, **dadurch gekennzeichnet,** daß das zentrische Zahnrad der Zahnradpumpe (1) ein innenverzahntes Hohlrad (2) ist.

4. Vorrichtung nach einem der Ansprüche 1 bis 3, **dadurch gekennzeichnet,** daß die Ausnehmungen (6') für die planetenartig angeordneten Stirnzahnräder (7) in tangentialer Richtung langlochartig verbreitert sind.

5. Vorrichtung nach einem der Ansprüche 1 bis 4, **dadurch gekennzeichnet,** daß die planetenartig angeordneten Stirnzahnräder aus einem Werkstoff bestehen, dessen Wärmeausdehnung größer ist, als diejenige des Werkstoffes des Hohlrades (2) und des Pumpeninneren (5).

6. Vorrichtung nach einem der Ansprüche 1 bis 5, **dadurch gekennzeichnet,** daß die planetenartig angeordneten Stirnzahnräder und das zentrale Zahnrad eine Sonderverzahnung aufweisen, derart, daß das eine Zahnrad (2) Zähne (39) einer Normalverzahnung und Zahnlücken (38) aufweist, die breiter sind als bei einer Normalverzahnung und das andere Zahnrad (7) Zahnlücken (39') einer Normalverzahnung und Zähne (38') aufweist, die entsprechend breiter sind als die Zahnlücken einer Normalverzahnung.

7. Vorrichtung nach einem der Ansprüche 1 bis 6, **dadurch gekennzeichnet,** daß das mit der An- bzw. Abtriebswelle fest verbundene, die planetenartig angeordneten Stirnzahnräder (7) aufnehmende Teil der Zahnradpumpe (1) aus zwei drehbar aufeinander gelagerten Bauteilen (40,41) besteht, die durch tangentiale, formschlüssig eingelagerte Federn miteinander elastisch gekuppelt sind.

## Claims

1. Apparatus for changing the throughflow quantity in respect of time of a fluid damping means in a torsional vibration damper, more especially for piston engines, spur gears being mounted in a planetary manner in the circumferential, cylindrical housing of said damper, which housing is connected to the drive and driven shaft respectively, and said spur gears form a gear pump for a closed loop of the damping means, which pump is in engagement with a central gear situated on the driven and drive shaft respectively, a storage chamber being provided in the feed pipe for the damping means on the respective pressure side and having a resiliently variable volume, e.g. a diaphragm store or the like and/or a piston valve which is controlled in a speed-dependent manner and the piston of which is suitable, as a throttle adjusting member, for changing the cross-section of the feed pipe by its axial displacement, characterized in that the planetary disposed spur gears (7) of the gear pump (1) are mounted in recesses (6, 6') in the pump interior (5) in a surface-to-surface manner between the axial end plates (3) of the gear pump (1) without any axle journals, and in that the pump interior (5) has a pressure-equalising duct (36), which surrounds the recess (6, 6') for the spur gears (7) with a spacing therebetween and terminates in the recess (6, 6'), which accommodates the spur wheel (7), diametrically relative to the point of engagement of the pair of gears (2, 7).

2. Apparatus for changing the throughflow quantity in respect of time of a fluid damping means in a torsional vibration damper, more especially for piston engines, spur gears being mounted in a planetary manner in the circumferential, cylindrical housing of said damper, which housing is connected to the drive and driven shaft respectively, and said spur gears form a gear pump for a closed loop of the damping means, which pump is in engagement with a central gear situated on the driven and drive shaft respectively, a storage chamber being provided in the feed pipe for the damping means on the respective pressure side and having a resiliently variable volume, e.g. a diaphragm store or the like and/or a piston valve which is controlled in a speed-dependent manner and the piston of which is suitable, as a throttle adjusting member, for changing the cross-section of the feed pipe by its axial displacement, characterised in that the planetary disposed spur gears (7) of the gear pump (1) are mounted in the recesses (6, 6') in the pump interior (5) in a surface-to-surface manner between the axial end plates (3) of the gear pump (1) without any axle journals and have diametric pressure-equalising bores (37), which are axially offset from one another and do not intersect one another.

3. Apparatus according to claim 1 or 2, characterised in that the central gear of the gear pump (1) is an internally toothed hollow wheel (2).

4. Apparatus according to one of claims 1 to 3, characterised in that the recesses (6') for the planetary disposed spur gears (7) are widened in the tangential direction in the manner of an elongate slot.

5. Apparatus according to one of claims 1 to 4, characterised in that the planetary disposed spur gears are formed from a material, the thermal expansion of which is greater than that of the material of the hollow wheel (2) and the pump interior (5).

6. Apparatus according to one of claims 1 to 5, characterised in that the planetary disposed spur gears and the central gear have a special toothing such that one gear (2) has teeth (39) of a normal toothing and tooth gaps (38) which are wider than is the case with normal toothing, and the other gear (7) has tooth gaps (39') of a normal toothing and teeth (38') which are correspondingly wider than the tooth gaps of a normal toothing.

7. Apparatus according to one of claims 1 to 6, characterised in that the part of the gear pump (1), which is securedly connected to the drive and driven shaft respectively and accommodates the planetary disposed spur gears (7), comprises two component parts (40, 41), which are rotatably mounted on each other and are resiliently interconnected by means of tangential springs which are incorporated in a form-fitting manner.

## Revendications

1. Dispositif pour changer le débit en fonction du temps d'un agent d'amortissement liquide dans un amortisseur de vibrations torsionnelles, en particulier pour des moteurs à piston, dans le carter d'amortisseur cylindrique, rotatif, et relié à l'arbre menant ou à l'arbre mené duquel sont montées, de façon planétaire, des roues dentées droites, lesquelles forment, en engagement avec une roue dentée centrale se trouvant sur l'arbre menant ou l'arbre mené, une pompe à roues dentées pour un circuit fermé de l'agent d'amortissement, une chambre d'accumulation présentant un volume élastiquement modifiable, par exemple un accumulateur à membrane ou analogue, et/ou une soupape à piston commandée en fonction de la vitesse de rotation étant prévues dans le conduit d'alimentation pour l'agent d'amortissement sur le côté de pression respectif, dont le piston est approprié, en tant qu'organe de réglage d'étranglement, pour modifier, par son déplacement axial, la section transversale du conduit d'alimentation,
caractérisé en ce que les roues dentées droites (7), agencées de façon planétaire, de la pompe à roues dentées (1) sont montées, en étant réalisées sans tourillon axial, de façon plane entre les plaques frontales axiales (3) de la pompe à roues dentées (1) dans des évidements (6,6') de l'intérieur (5) de la pompe, et en ce que l'intérieur de la pompe (5) présente un canal de compensation de pression (36) entourant avec un écartement l'évidement (6,6') pour les roues dentées droites (7), canal qui débouche diamétralement à la position d'engagement de la paire de roues dentées (2,7) dans l'évidement (6,6') recevant la roue dentée droite (7).

2. Dispositif pour changer le débit en fonction du temps d'un agent d'amortissement liquide dans un amortisseur de vibrations torsionnelles, en particulier pour des moteurs à piston, dans le carter d'amortisseur cylindrique, rotatif, et relié à l'arbre menant ou à l'arbre mené duquel sont montées, de façon planétaire, des roues dentées droites, lesquelles forment, en engagement avec une roue dentée centrale se trouvant sur l'arbre menant ou l'arbre mené, une pompe à roues dentées pour un circuit fermé de l'agent d'amortissement, une chambre d'accumulation présentant un volume élastiquement modifiable, par exemple un accumulateur à membrane ou analogue, et/ou une soupape à piston commandée en fonction de la vitesse de rotation étant prévues dans le conduit d'alimentation pour l'agent d'amortissement sur le côté de pression respectif, dont le piston est approprié, en tant qu'organe de réglage d'étranglement, pour modifier, par son déplacement axial, la section transversale du conduit d'alimentation,
caractérisé en ce que les roues dentées droites (7), agencées de façon planétaire, de la pompe à roues dentées (1), réalisées sans tourillon axial, sont montées à plat entre les plaques frontales axiales (3) de la pompe à roues dentées (1) dans les évidements (6,6') de l'intérieur (5) de la pompe, et présentent des perçages de compensation de pression diamétraux (37) axialement décalés l'un par rapport à l'autre et ne se coupant pas l'un l'autre.

3. Dispositif selon la revendication 1 ou 2,
caractérisé en ce que la roue dentée centrale de la pompe à roues dentées (1) est une roue creuse (2) dentée intérieurement.

4. Dispositif selon une des revendications 1 à 3,
caractérisé en ce que les évidements (6') pour les roues dentées droites (7) agencées de façon planétaire sont élargis en direction tangentielle sous forme de trous oblongs.

5. Dispositif selon une des revendications 1 à 4,
caractérisé en ce que les roues dentées droites agencées de façon planétaire sont constituées d'une matière dont la dilatation thermique est plus grande que celle de la matière de la roue creuse (2) et de l'intérieur (5) de la pompe.

6. Dispositif selon une des revendications 1 à 5,
caractérisé en ce que les roues dentées droites agencées de façon planétaire et la roue dentée centrale présentent une denture particulière de sorte qu'une roue dentée (2) présente des dents (39) d'une denture normale et des entredents (38) qui sont plus larges que pour une denture normale et l'autre roue dentée (7) présente des entredents (39') d'une denture normale et des dents (38') qui sont plus larges, de façon correspondante, que les entredents d'une denture normale.

7. Dispositif selon une des revendications 1 à 6,
caractérisé en ce que la partie de la pompe à roues dentées (1) recevant les roues dentées droites (7) agencées de façon planétaire et solidaire de l'arbre menant ou de l'arbre mené est constituée de deux pièces (40,41) montées l'une sur l'autre de façon rotative, qui sont couplées élastiquement l'une à l'autre par des ressorts tangentiels montés de façon mécanique.
